# EUROPEAN PATENT APPLICATION

(11) **EP 4 618 693 A1**
(43) Date of publication of application: **17.09.2025**
(21) Application number: 23890407.2
(22) Date of filing: 26.09.2023
(51) Int. Cl.: H04W 88/10

(54) **SWITCHING METHOD, COMMUNICATION APPARATUS, AND COMMUNICATION SYSTEM**

(30) Priority: 18.11.2022 CN 202211450886
(71) Applicant: Huawei Technologies Co., Ltd., Shenzhen, Guangdong 518129 (CN)
(72) Inventor: JIANG, Lihong, Shenzhen, Guangdong 518129 (CN); YOU, Lan, Shenzhen, Guangdong 518129 (CN); WANG, Yu, Shenzhen, Guangdong 518129 (CN); SHI, Daikui, Shenzhen, Guangdong 518129 (CN); CAI, Buxiao, Shenzhen, Guangdong 518129 (CN); WANG, Yikai, Shenzhen, Guangdong 518129 (CN); HUANG, Bijia, Shenzhen, Guangdong 518129 (CN); LIU, Jianjun, Shenzhen, Guangdong 518129 (CN)
(74) Representative: Körber, Martin Hans
(86) International application number: PCT/CN2023/121443
(87) International publication number: WO 2024/103970

(57) **Abstract**

This application provides a switching method, a communication apparatus, and a communication system. The method includes: An access network device determines whether a mode switching condition is met; and when the mode switching condition is met, the access network device switches an operation mode from a first mode to a second mode. The first mode is one of a communication mode and a sensing mode, the second mode is the other one of the communication mode and the sensing mode, and the sensing mode is used to sense a situation change of an environment in which the access network device is located. In this solution, on a basis that the access network device has a communication function, a sensing function is added to the access network device, and then the access network device switches between the sensing mode and the communication mode, so that the sensing function or the communication function can be enabled based on an application requirement, and a capability of the access network device is improved.

## Description

### CROSS-REFERENCE TO RELATED APPLICATIONS

This application claims priority to Chinese Patent Application No. 202211450886.0, filed with the China National Intellectual Property Administration on November 18, 2022 and entitled "SWITCHING METHOD, COMMUNICATION APPARATUS, AND COMMUNICATION SYSTEM", which is incorporated herein by reference in its entirety.

### TECHNICAL FIELD

This application relates to the field of communication technologies, and in particular, to a switching method, a communication apparatus, and a communication system.

### BACKGROUND

In current communication, an access network device has a wireless transceiver function, and can connect a terminal device to a wireless network, to provide uplink transmission and downlink transmission services for the terminal device. That is, the access network device has a communication function.

However, with development of communication technologies, more application scenarios emerge, and a requirement on the access network device is increasingly high. Therefore, how to continuously improve a capability of the access network device needs to be studied and resolved.

### SUMMARY

Embodiments of this application provide a switching method, a communication apparatus, and a communication system, to improve a capability of an access network device.

According to a first aspect, an embodiment of this application provides a switching method. The method may be performed by an access network device or a chip used in an access network device. For example, the access network device performs the method. The access network device determines whether a mode switching condition is met; and when the mode switching condition is met, the access network device switches an operation mode from a first mode to a second mode. The first mode is one of a communication mode and a sensing mode, the second mode is the other one of the communication mode and the sensing mode, and the sensing mode is used to sense a situation change of an environment in which the access network device is located.

In the foregoing solution, on a basis that the access network device has a communication function, a sensing function is added to the access network device, and then the access network device switches between the sensing mode and the communication mode, so that the sensing function or the communication function can be enabled based on an application requirement, and a capability of the access network device is improved.

In a possible implementation method, the access network device receives the mode switching condition from a core network device.

In the foregoing solution, the core network device configures the mode switching condition, so that precise configuration of the mode switching condition can be implemented.

In a possible implementation method, the mode switching condition indicates mode switching time at a symbol level, a slot level, or a subframe level.

In the foregoing solution, high-precision configuration of the mode switching time indicated by the mode switching condition can be implemented, and this helps improve sensitivity of switching between different operation modes.

In a possible implementation method, when a quantity of target objects detected by the access network device exceeds a first threshold, the access network device updates the mode switching condition. In time division corresponding to an updated mode switching condition, time used for communication is greater than time used for sensing.

In the foregoing solution, time can be properly divided between the communication mode and the sensing mode, and this helps reduce energy consumption of the access network device.

In a possible implementation method, when a quantity of target objects detected by the access network device is less than a second threshold, the access network device updates the mode switching condition. In time division corresponding to an updated mode switching condition, time used for communication is less than time used for sensing.

In the foregoing solution, time can be properly divided between the mode and the sensing mode, and this helps reduce energy consumption of the access network device.

In a possible implementation method, when the operation mode of the access network device is the sensing mode, the access network device obtains information about the detected target object. The access network device determines, based on the information about the target object, a beam direction and/or a communication shutdown manner that correspond/corresponds to the communication mode.

In the foregoing solution, when the access network device detects no target object in the sensing mode, the access network device may shut down a communication slot, to achieve an energy saving objective. When the access network device detects the target object in the sensing mode, the access network device determines information such as a position, a speed, and a size of the target object based on the information about the target object, and determines the beam direction based on the information about the target object, to assist in beam alignment, improve a coverage rate, a throughput, and communication quality, and reduce interference.

According to a second aspect, an embodiment of this application provides a switching method. The method may be performed by an access network device or a chip used in an access network device. For example, the access network device performs the method. The access network device receives a switching instruction from a core network device, where the switching instruction instructs the access network device to switch from a first operation manner to a second operation manner. The access network device switches from the first operation manner to the second operation manner based on the switching instruction. The first operation manner is an operation manner in which a communication mode is primary and a sensing mode is secondary, and the second operation manner is an operation manner in which the sensing mode is primary and the communication mode is secondary. Alternatively, the first operation manner is an operation manner in which a sensing mode is primary and a communication mode is secondary, and the second operation manner is an operation manner in which the communication mode is primary and the sensing mode is secondary. The sensing mode is used to sense a situation change of an environment in which the access network device is located.

In the foregoing solution, on a basis that the access network device has a communication function, a sensing function is added to the access network device, and then the access network device switches between an operation manner in which sensing is primary and an operation manner in which communication is primary, so that the sensing function or the communication function can be enabled based on an application requirement, a time ratio of sensing to communication can be allocated, and a capability of the access network device is improved.

In a possible implementation method, that the switching instruction instructs the access network device to switch from a first operation manner to a second operation manner includes: The switching instruction instructs the access network device to switch from the first operation manner to the second operation manner at a first moment. That the access network device switches from the first operation manner to the second operation manner based on the switching instruction includes: If determining that a current moment is the first moment, the access network device switches from the first operation manner to the second operation manner.

In the foregoing solution, precise switching control can be performed on an operation manner of the access network device, and this helps improve communication quality and reduce energy consumption.

In a possible implementation method, when an operation mode of the access network device is the sensing mode, the access network device obtains information about a detected target object. The access network device determines, based on the information about the target object, a beam direction and/or a communication shutdown manner that correspond/corresponds to the communication mode.

According to a third aspect, an embodiment of this application provides a switching method. The method may be performed by a core network device or a chip used in a core network device. For example, the core network device performs the method. The core network device sends a mode switching condition to an access network device, where the mode switching condition indicates a condition for the access network device to switch an operation mode from a first mode to a second mode. The first mode is one of a communication mode and a sensing mode, the second mode is the other one of the communication mode and the sensing mode, and the sensing mode is used to sense a situation change of an environment in which the access network device is located.

According to a fourth aspect, an embodiment of this application provides a switching method. The method may be performed by a core network device or a chip used in a core network device. For example, the core network device performs the method. The core network device sends a switching instruction to an access network device, where the switching instruction instructs the access network device to switch from a first operation manner to a second operation manner. The first operation manner is an operation manner in which a communication mode is primary and a sensing mode is secondary, and the second operation manner is an operation manner in which the sensing mode is primary and the communication mode is secondary. Alternatively, the first operation manner is an operation manner in which a sensing mode is primary and a communication mode is secondary, and the second operation manner is an operation manner in which the communication mode is primary and the sensing mode is secondary. The sensing mode is used to sense a situation change of an environment in which the access network device is located.

In a possible implementation method, that the switching instruction instructs the access network device to switch from a first operation manner to a second operation manner includes: The switching instruction instructs the access network device to switch from the first operation manner to the second operation manner at a first moment.

Based on any implementation method in the first aspect to the fourth aspect:
In a possible implementation method, when an operation mode of the access network device is the communication mode, an antenna of the access network device uses a time division duplex mode.

In a possible implementation method, when the operation mode of the access network device is the sensing mode, a first part of antennas of the access network device are configured to send sensing information, a second part of the antennas of the access network device are configured to receive the sensing information, and the access network device receives and sends the sensing information in a full duplex manner.

In a possible implementation method, when the operation mode of the access network device is the sensing mode, a part or all of antennas of the access network device receive and send the sensing information in a time division multiplexing manner.

In a possible implementation method, one hardware system is configured in the access network device, and the communication mode and the sensing mode share the hardware system.

In the foregoing solution, the sensing mode and the communication mode share a same hardware system, to improve hardware resource utilization.

In a possible implementation method, a first hardware system and a second hardware system are configured in the access network device. The communication mode corresponds to the first hardware system, and the sensing mode corresponds to the second hardware system.

In the foregoing solution, the sensing mode and the communication mode separately use different hardware systems. This helps improve performance in the sensing mode and performance in the communication mode, to improve an operation capability of the access network device.

According to a fifth aspect, an embodiment of this application provides a communication apparatus. The apparatus may be an access network device, or may be a chip used in an access network device. The apparatus has a function of implementing any implementation method in the first aspect and the second aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a core network device, or may be a chip used in a core network device. The apparatus has a function of implementing any implementation method in the third aspect and the fourth aspect. The function may be implemented by hardware, or may be implemented by hardware executing corresponding software. The hardware or the software includes one or more modules corresponding to the function.

According to a seventh aspect, an embodiment of this application provides a communication apparatus, including a processor coupled to a memory. The processor is configured to invoke a program stored in the memory, to perform any implementation method in the first aspect to the fourth aspect. The memory may be located inside or outside the apparatus. In addition, there may be one or more processors.

According to an eighth aspect, an embodiment of this application provides a communication apparatus, including a processor and a memory. The memory is configured to store computer instructions, and when the apparatus runs, the processor executes the computer instructions stored in the memory, to enable the apparatus to perform any implementation method in the first aspect to the fourth aspect.

According to a ninth aspect, an embodiment of this application provides a communication apparatus, including units or means (means) configured to perform steps of any implementation method in the first aspect to the fourth aspect.

According to a tenth aspect, an embodiment of this application provides a communication apparatus, including a processor and an interface circuit. The processor is configured to: communicate with another apparatus through an interface circuit, and perform any implementation method in the first aspect to the fourth aspect. There are one or more processors.

According to an eleventh aspect, an embodiment of this application further provides a computer-readable storage medium, where the computer-readable storage medium stores instructions, and when the instructions are run on a communication apparatus, any implementation method in the first aspect to the fourth aspect is performed.

According to a twelfth aspect, an embodiment of this application further provides a computer program product. The computer program product includes a computer program or instructions. When the computer program or the instructions are run by a communication apparatus, any implementation method in the first aspect to the fourth aspect is performed.

According to a thirteenth aspect, an embodiment of this application further provides a chip system, including a processor, configured to perform any implementation method in the first aspect to the fourth aspect.

According to a fourteenth aspect, an embodiment of this application further provides a communication system. The communication system includes an access network device configured to perform any implementation method in the first aspect and a core network device configured to perform any implementation method in the third aspect.

According to a fifteenth aspect, an embodiment of this application further provides a communication system. The communication system includes an access network device configured to perform any implementation method in the second aspect and a core network device configured to perform any implementation method in the fourth aspect.

According to a sixteenth aspect, an embodiment of this application further provides a switching method, including: A core network device sends a mode switching condition to an access network device; the access network device determines whether the mode switching condition is met; and when the mode switching condition is met, the access network device switches an operation mode from a first mode to a second mode. The first mode is one of a communication mode and a sensing mode, the second mode is the other one of the communication mode and the sensing mode, and the sensing mode is used to sense a situation change of an environment in which the access network device is located.

According to a seventeenth aspect, an embodiment of this application further provides a switching method, including: A core network device sends a switching instruction to an access network device, where the switching instruction instructs the access network device to switch from a first operation manner to a second operation manner; and the access network device switches from the first operation manner to the second operation manner based on the switching instruction. The first operation manner is an operation manner in which a communication mode is primary and a sensing mode is secondary, and the second operation manner is an operation manner in which the sensing mode is primary and the communication mode is secondary. Alternatively, the first operation manner is an operation manner in which a sensing mode is primary and a communication mode is secondary, and the second operation manner is an operation manner in which the communication mode is primary and the sensing mode is secondary. The sensing mode is used to sense a situation change of an environment in which the access network device is located.

### BRIEF DESCRIPTION OF DRAWINGS

FIG. 1 is a diagram of a communication system according to an embodiment of this application;
FIG. 2 is a schematic flowchart of a switching method according to an embodiment of this application;
FIG. 3 is a diagram of mode switching time;
FIG. 4 is a diagram of an access network device having a sensing function and a communication function according to an embodiment of this application;
FIG. 5 is a diagram of antenna receiving and sending according to an embodiment of this application;
FIG. 6 is a diagram of antenna receiving and sending according to an embodiment of this application;
FIG. 7 is a schematic flowchart of a switching method according to an embodiment of this application;
FIG. 8 is a diagram of a communication apparatus according to an embodiment of this application; and
FIG. 9 is a diagram of a communication apparatus according to an embodiment of this application.

### DESCRIPTION OF EMBODIMENTS

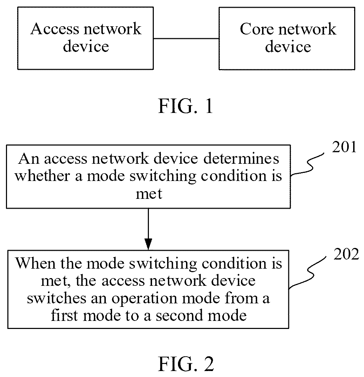

FIG. 1 is a diagram of a communication system according to an embodiment of this application. The communication system includes an access network device and a core network device. For operations performed by the access network device and the core network device, refer to descriptions in subsequent method embodiments.

The access network device is a device having a wireless transceiver function, and is configured to communicate with a terminal device; or may be a device that can connect a terminal device to a wireless network, for example, a radio access network (radio access network, RAN) device or node. The access network device in embodiments of this application may include base stations in various forms, for example, a macro base station, a micro base station (also referred to as a small cell), a relay station, an access point, a device that implements a base station function in a communication system evolved after a 5^{th} generation (5^{th} generation, 5G) communication system, an access point (access point, AP) in a wireless fidelity (wireless fidelity, Wi-Fi) system, an integrated access and backhaul (integrated access and backhaul, IAB) node, a transmission and reception point (transmission and reception point, TRP), a transmitting point (transmitting point, TP), a mobile switching center, and a device that undertakes a base station function in device-to-device (Device-to-Device, D2D), vehicle-to-everything (vehicle-to-everything, V2X), and machine-to-machine (machine-to-machine, M2M) communication. The access network device may further include a central unit (central unit, CU) and a distributed unit (distributed unit, DU) in a cloud access network (cloud radio access network, C-RAN) system, and a network device in a non-terrestrial communication network (non-terrestrial network, NTN) communication system, that is, may be deployed on a high-altitude platform or a satellite. Alternatively, the access network device may be various devices that form an access node, for example, an active antenna unit (active antenna unit, AAU), a baseband unit (baseband unit, BBU), or a radio remote unit (radio remote unit, RRU). This is not specifically limited in embodiments of this application.

In an implementation method, a sensing-communication controller may be deployed in the access network device. The sensing-communication controller includes a series of function components that support mutual exchange between a communication function and a sensing function. The function components include but are not limited to: a function component configured to receive and send a switching instruction, a function component configured to select a frame format, and a function component configured to control a sensing-communication slot.

In an implementation method, the sensing-communication controller may be deployed at any position of an L1 layer, an L2 layer, an L3 layer, or an intermediate frequency module of the access network device.

In an implementation method, an independently designed isolation structure may be added to an antenna of the access network device, to support the antenna in operating in modes such as 5G communication, beamforming (beamforming) sensing, and multiple-input and multiple-output (multiple-input and multiple-output, MIMO) sensing.

The core network device may be a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, or the like. This is not limited in this application.

FIG. 2 is a schematic flowchart of operation mode switching according to an embodiment of this application. The method includes the following steps.

Step 201: An access network device determines whether a mode switching condition is met.

It may be understood that the access network device may determine whether the mode switching condition is met.

The mode switching condition may be set before delivery, determined by the access network device, or configured by a core network device.

In an implementation method, the mode switching condition indicates mode switching time at a symbol level. To be specific, some symbols at fixed positions in one slot are used for a communication mode, and some other symbols at fixed positions in the slot are used for a sensing mode. For example, one slot includes 14 symbols. The mode switching condition indicates that a 4^{th} symbol and a 5^{th} symbol in each slot are used for the sensing mode, and other symbols are used for the communication mode.

In an implementation method, the mode switching condition indicates mode switching time at a slot level. To be specific, some slots at fixed positions in specific duration are used for a communication mode, and some other slots at fixed positions in the duration are used for a sensing mode. For example, 1 ms includes two slots. The mode switching condition indicates that a 3^{rd} slot and a 4^{th} slot in every 10 ms (that is, 20 consecutive slots) are used for the sensing mode, and other slots are used for the communication mode. In another implementation method, the mode switching condition indicates mode switching time at a subframe level. To be specific, some subframes at fixed positions in specific duration are used for a communication mode, and some other subframes at fixed positions in the duration are used for a sensing mode. For example, one subframe occupies 10 ms. The mode switching condition indicates that a 1^{st} subframe in every 100 ms (that is, 10 consecutive subframes) is used for the sensing mode, and other subframes are used for the communication mode.

In the foregoing method, the mode switching condition indicates the mode switching time at the symbol level, the slot level, or the subframe level. This can implement high-precision configuration of the mode switching time indicated by the mode switching condition, and help improve sensitivity of switching between different operation modes.

In an implementation method, the mode switching condition indicates a mode switching periodicity, in other words, the access network device may periodically perform mode switching. Optionally, a value of the periodicity may dynamically change. For example, the core network device configures the value of the periodicity for the access network device. For example, the core network device dynamically configures the periodicity for the access network device, and the dynamic configuration may be determined based on a mode switching requirement in a network environment.

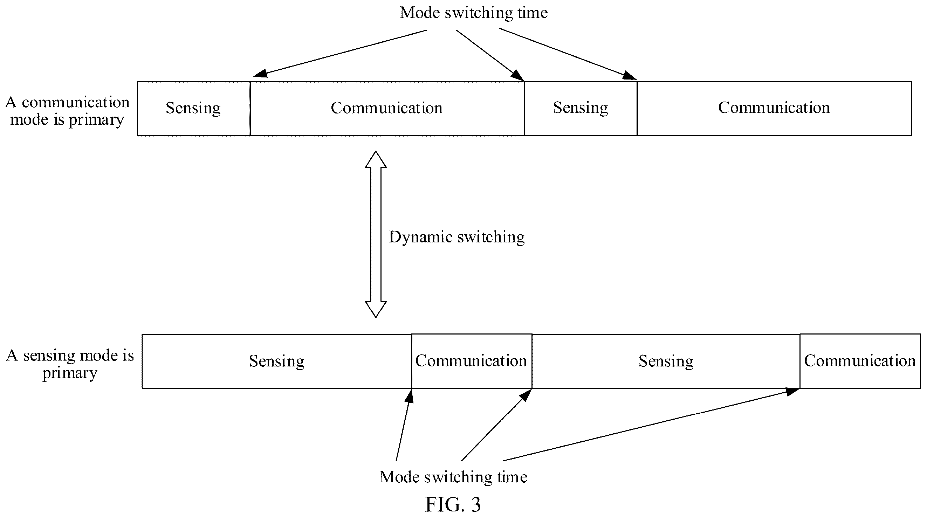

In another implementation method, the mode switching time indicated by the mode switching condition dynamically changes. FIG. 3 is a diagram of mode switching time. When a vehicle or user equipment on a vehicle has accessed the access network device, the mode switching condition corresponds to mode switching time at which communication is primary. When no vehicle or user equipment on a vehicle accesses the access network device, the mode switching condition corresponds to mode switching time at which sensing is primary.

Step 202: When the mode switching condition is met, the access network device switches an operation mode from a first mode to a second mode.

When the mode switching condition is not met, the access network device maintains a current operation mode.

The first mode is one of the communication mode and the sensing mode, and the second mode is the other one of the communication mode and the sensing mode. Therefore, when the first mode is the communication mode, the second mode is the sensing mode; or when the first mode is the sensing mode, the second mode is the communication mode.

The communication mode means that the access network device is configured for communication, and provides uplink transmission and downlink transmission services for a terminal device.

The sensing mode means that the access network device is configured to sense status and trend changes of an environment in which the access network device is located, and the status and trend changes are changes of a physical status and a movement trend. It may also be understood as that the access network device is configured to sense a target object corresponding to the access network device, or is configured to sense an object in the environment in which the access network device is located. For example, the access network device may sense an object around the access network device in a radar sensing manner, or sense an object around the access network device in a visual sensing manner.

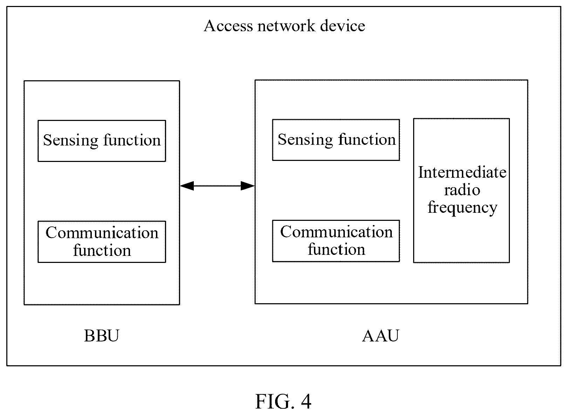

FIG. 4 is a diagram of an access network device having a sensing function and a communication function according to an embodiment of this application. The access network device includes a BBU and an AAU, and the BBU and the AAU each have a sensing function and a communication function. When the BBU switches to a sensing mode, the BBU notifies the AAU to switch to the sensing mode. When the BBU switches to a communication mode, the BBU notifies the AAU to switch to the communication mode. That is, a mode of the BBU is consistent with a mode of the AAU.

In another example, the access network device may alternatively include a BBU, an RRU, and an antenna. The BBU, the RRU, and the antenna each have a sensing function and a communication function. When the BBU switches to a sensing mode, the BBU notifies the RRU and the antenna to switch to the sensing mode. When the BBU switches to a communication mode, the BBU notifies the RRU and the antenna to switch to the communication mode. That is, a mode of the BBU is consistent with a mode of the RRU and a mode of the antenna.

In the foregoing solutions, on a basis that the access network device has the communication function, the sensing function is added to the access network device, and then the access network device switches between the sensing mode and the communication mode, so that the sensing function or the communication function can be enabled based on an application requirement, and a capability of the access network device is improved.

In an implementation method, one hardware system is configured in the access network device, and the communication mode and the sensing mode share the hardware system. The hardware system includes at least one of a hardware channel, a hardware link, a hardware device, or an antenna. Optionally, the hardware system further includes a switch unit. The switch unit is configured to: when it is determined that a mode switching condition is met, indicate the access network device to switch between the sensing mode and the communication mode.

In another implementation method, two hardware systems: a first hardware system and a second hardware system are configured in the access network device. The communication mode corresponds to the first hardware system, and the sensing mode corresponds to the second hardware system. Optionally, the access network device further includes a switch unit. The switch unit is configured to: when it is determined that a mode switching condition is met, indicate the access network device to switch between the sensing mode and the communication mode, enable the first hardware system when the access network device is in the communication mode, and enable the second hardware system when the access network device is in the sensing mode.

In an implementation method, when an operation mode of the access network device is the communication mode, it may also be understood as that current time is time in which the access network device is configured to perform the communication function, and the antenna of the access network device uses a time division duplex (time division duplex, TDD) mode. That is, the access network device sends and receives a signal in a time division manner.

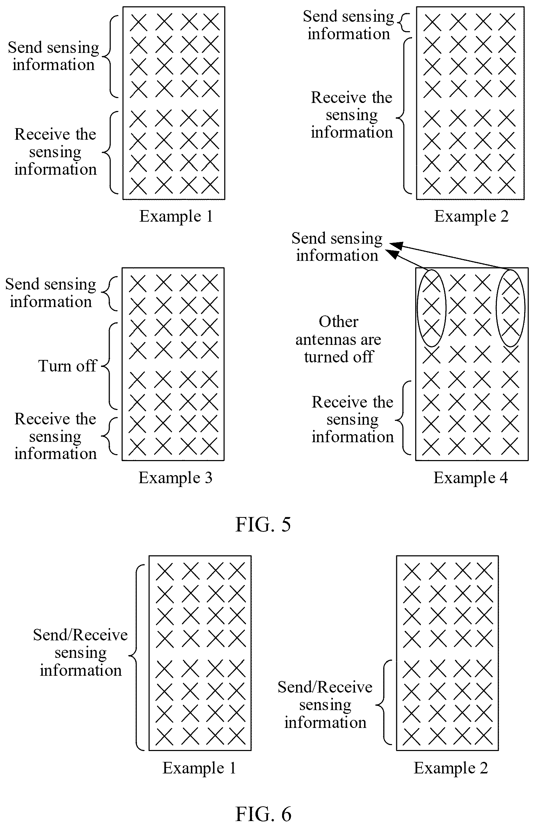

In an implementation method, when an operation mode of the access network device is the sensing mode, it may also be understood as that current time is time in which the access network device is configured to perform the sensing function, a first part of antennas of the access network device are configured to send sensing information, and a second part of the antennas of the access network device are configured to receive the sensing information. The sensing information may also be referred to as a signal used for sensing or a sensing signal. The first part of the antennas and the second part of the antennas are different antennas. FIG. 5 is a diagram of antenna receiving and sending according to an embodiment of this application. Antennas of an access network device are divided into a first part of the antennas and a second part of the antennas. The first part of the antennas are configured to send sensing information, and the second part of the antennas are configured to receive sensing information that is sent by the access network device and then is reflected by a surrounding object. The access network device receives and sends the sensing information in a full duplex manner. In other words, a sending function of the first part of the antennas and a receiving function of the second part of the antennas are simultaneously enabled. When the first part of the antennas send the sensing information, the second part of the antennas can also receive the reflected sensing information at any time. In an example 1 in FIG. 5, an upper half of antennas are configured to send the sensing information, and a lower half of antennas are configured to receive the sensing information. In an example 2, antennas in a first row are configured to send the sensing information, and other antennas are configured to receive the sensing information. In an example 3, antennas in first two rows are used to send the sensing information, the last two rows of antennas are configured to receive the sensing information, and other antennas are turned off. In an example 4, antennas in first three rows of a first column and antennas in first three rows of a last column are configured to send the sensing information, antennas in last four rows are configured to receive the sensing information, and other antennas are turned off. The antenna may be an antenna element, or may be an antenna of another form. This is not limited in this application.

In another implementation method, when an operation mode of the access network device is the sensing mode, that is, current time is time in which the access network device is configured to perform the sensing function, a part or all of antennas of the access network device receive and send the sensing information in a time division multiplexing manner. FIG. 6 is a diagram of antenna receiving and sending according to an embodiment of this application. An access network device receives and sends sensing information on a same antenna in a time division multiplexing manner. An example 1 in FIG. 6 is used as an example. The access network device sends the sensing information on all antennas at first time, and then receives, on all the antennas at second time, the sensing information reflected by a surrounding object. An example 2 in FIG. 6 is used as an example. The access network device sends the sensing information on a part of antennas (that is, antennas in last four rows) at first time, and then receives, on the same part of the antennas at second time, the sensing information reflected by a surrounding object.

In an implementation method, when a quantity of target objects detected by the access network device exceeds a first threshold, the access network device updates a mode switching condition. In time division corresponding to an updated mode switching condition, time used for communication is greater than time used for sensing, that is, a communication mode is primary, and a sensing mode is secondary. For example, the access network device in this application is deployed at each station of a railway. When the access network device detects, in the sensing mode, a target object (for example, a person on a train) that exceeds the first threshold, it indicates that the train is about to arrive or has already arrived. Therefore, a time division manner corresponding to the mode switching condition of the access network device is adjusted to a time division manner in which the communication mode is primary and the sensing mode is secondary, to provide a communication service for user equipment on the train. For the time division manner in which communication is primary and sensing is secondary, refer to FIG. 3. Optionally, in this manner, when the access network device senses a large quantity of target objects, because the target objects are on the train and are not abnormal target objects, the access network device does not need to generate alarm information for reporting, to avoid generating a large quantity of false alarms.

In another implementation method, when a quantity of target objects detected by the access network device is less than a second threshold, the access network device updates a mode switching condition. In time division corresponding to an updated mode switching condition, time used for communication is less than time used for sensing, that is, a sensing mode is primary, and a communication mode is secondary. For example, the access network device in this application is deployed at each station of a railway. When the access network device detects, in the sensing mode, a target object (for example, a person on a train) less than the second threshold, it indicates that the train is about to leave or has already left. Therefore, a time division manner corresponding to the mode switching condition of the access network device is adjusted to a time division manner in which the sensing mode is primary and the communication mode is secondary, to reduce signaling overheads and reduce energy consumption. For the time division manner in which sensing is primary and communication is secondary, refer to FIG. 3.

In an implementation method, when an operation mode of the access network device is the sensing mode, the access network device obtains information about the detected target object, and determines, based on the information about the target object, a beam direction and/or a communication shutdown manner that correspond/corresponds to the communication mode. For example, when the access network device detects no target object in the sensing mode, the access network device may shut down a communication slot, to achieve an energy saving objective. For another example, when the access network device detects the target object in the sensing mode, the access network device determines information such as a position, a speed, and a size of the target object based on the information about the target object, and determines the beam direction based on the information about the target object, to assist in beam alignment and improve communication quality.

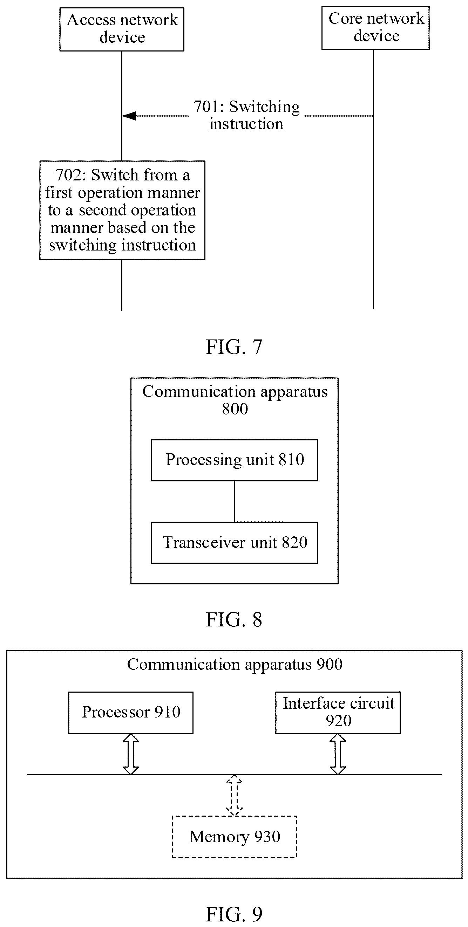

FIG. 7 is a schematic flowchart of operation mode switching according to an embodiment of this application. The method includes the following steps.

Step 701: A core network device sends a switching instruction to an access network device.

Correspondingly, the access network device receives the switching instruction.

The switching instruction instructs the access network device to switch from a first operation manner to a second operation manner.

For example, the access network device is deployed at each station of a railway, and the core network device learns of information such as a distance between neighboring stations and a running line and a speed of a train in advance, so that the core network device can determine accurate time at which each train arrives at or leaves each station. Therefore, when determining that the train arrives at or is about to arrive at the station, the core network device sends the switching instruction to the access network device at the station, or when determining that the train leaves or is about to leave the station, the core network device sends the switching instruction to the access network device at the station.

For example, the core network device may configure a periodicity for the access network device to switch from the first operation manner to the second operation manner. In other words, the core network device may notify the access network device by using the switching instruction, so that the access network device periodically switches from the first operation manner to the second operation manner. Alternatively, the core network device may periodically send the switching instruction, so that the access network device can periodically switch an operation manner. Step 702: The access network device switches from the first operation manner to the second operation manner based on the switching instruction.

The first operation manner is an operation manner in which a communication mode is primary and a sensing mode is secondary, and the second operation manner is an operation manner in which the sensing mode is primary and the communication mode is secondary. Alternatively, the first operation manner is an operation manner in which a sensing mode is primary and a communication mode is secondary, and the second operation manner is an operation manner in which the communication mode is primary and the sensing mode is secondary.

That the communication mode is primary and the sensing mode is secondary means that duration used for a communication function is greater than duration used for a sensing function. For example, in a period of set duration, 90% of the duration is used for communication, and 10% of the duration is used for sensing. For example, an upper half of FIG. 3 is an example in which the communication mode is primary and the sensing mode is secondary.

That the sensing mode is primary and the communication mode is secondary means that the duration used for the sensing function is greater than the duration used for the communication function. For example, in a period of set duration, 80% of the duration is used for sensing, and 20% of the duration is used for communication. For example, a lower half of FIG. 3 is an example in which the sensing mode is primary and the communication mode is secondary.

For meanings of the sensing mode and the communication mode, refer to the descriptions in the embodiment in FIG. 2. Details are not described again.

In the foregoing solutions, on a basis that the access network device has the communication function, the sensing function is added to the access network device, and then the access network device switches between the operation manner in which sensing is primary and the operation manner in which communication is primary, so that the sensing function or the communication function can be enabled based on an application requirement, a time ratio of sensing to communication can be allocated, and a capability of the access network device is improved.

In an implementation method, if the switching instruction specifically instructs the access network device to switch from the first operation manner to the second operation manner at a first moment, step 702 is specifically: If determining that a current moment is the first moment, the access network device switches the operation manner from the first operation manner to the second operation manner.

For other implementation details of the embodiment in FIG. 7, such as a hardware deployment manner, an antenna operation manner, determining of a beam direction, and determining of a communication shutdown manner, refer to the descriptions in the embodiment in FIG. 2. Details are not described again.

In another implementation method in this embodiment of this application, the access network device may alternatively determine whether an operation manner switching condition is met, and when the operation manner switching condition is met, the access network device switches from the first operation manner to the second operation manner. For meanings of the first operation manner and the second operation manner, refer to the descriptions in the embodiment in FIG. 7. Details are not described again. According to the method, the access network device switches the operation manner based on the switching instruction of the core network device. The operation manner may be set before delivery, determined by the access network device, or configured by the core network device.

It may be understood that, to implement functions in the foregoing embodiments, the access network device or the core network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 8 and FIG. 9 are diagrams of structures of possible communication apparatuses according to embodiments of this application. These communication apparatuses may be configured to implement functions of the access network device or the core network device in the method embodiment in FIG. 2 or FIG. 7, and therefore can also implement beneficial effects of the foregoing method embodiments. In embodiments of this application, the communication apparatus may be an access network device or a core network device, or may be a module (for example, a chip) used in an access network device or a core network device.

A communication apparatus 800 shown in FIG. 8 includes a processing unit 810 and a transceiver unit 820. The communication apparatus 800 is configured to implement functions of the access network device or the core network device in the foregoing method embodiments.

When the communication apparatus 800 is configured to implement the functions of the access network device in the foregoing method embodiments, the processing unit 810 is configured to: determine whether a mode switching condition is met; and when the mode switching condition is met, switch an operation mode from a first mode to a second mode. The first mode is one of a communication mode and a sensing mode, the second mode is the other one of the communication mode and the sensing mode, and the sensing mode is used to sense a situation change of an environment in which the access network device is located.

In a possible implementation method, the transceiver unit 820 is configured to receive the mode switching condition from the core network device.

In a possible implementation method, the mode switching condition indicates mode switching time at a symbol level, a slot level, or a subframe level.

In a possible implementation method, the processing unit 810 is specifically configured to: when a quantity of detected target objects exceeds a first threshold, update, by the access network device, the mode switching condition. In time division corresponding to an updated mode switching condition, time used for communication is greater than time used for sensing.

In a possible implementation method, the processing unit 810 is specifically configured to: when a quantity of detected target objects is less than a second threshold, update, by the access network device, the mode switching condition. In time division corresponding to an updated mode switching condition, time used for communication is less than time used for sensing.

In a possible implementation method, the processing unit 810 is further configured to: when the operation mode of the access network device is the sensing mode, obtain information about the detected target object; and determine, based on the information about the target object, a beam direction and/or a communication shutdown manner that correspond/corresponds to the communication mode.

When the communication apparatus 800 is configured to implement the functions of the access network device in the foregoing method embodiments, the transceiver unit 820 is configured to receive a switching instruction from the core network device, where the switching instruction instructs the access network device to switch from a first operation manner to a second operation manner. The processing unit 810 is configured to switch from the first operation manner to the second operation manner based on the switching instruction. The first operation manner is an operation manner in which a communication mode is primary and a sensing mode is secondary, and the second operation manner is an operation manner in which the sensing mode is primary and the communication mode is secondary. Alternatively, the first operation manner is an operation manner in which a sensing mode is primary and a communication mode is secondary, and the second operation manner is an operation manner in which the communication mode is primary and the sensing mode is secondary. The sensing mode is used to sense a situation change of an environment in which the access network device is located.

In a possible implementation method, that the switching instruction instructs the access network device to switch from a first operation manner to a second operation manner includes: The switching instruction instructs the access network device to switch from the first operation manner to the second operation manner at a first moment. The processing unit 810 is specifically configured to: if determining that a current moment is the first moment, switch from the first operation manner to the second operation manner.

In a possible implementation method, the processing unit 810 is further configured to: when an operation mode of the access network device is the sensing mode, obtain information about a detected target object; and determine, based on the information about the target object, a beam direction and/or a communication shutdown manner that correspond/corresponds to the communication mode.

When the communication apparatus 800 is configured to implement the functions of the core network device in the foregoing method embodiments, the transceiver unit 820 is configured to send a mode switching condition to the access network device, where the mode switching condition indicates a condition for the access network device to switch an operation mode from a first mode to a second mode. The first mode is one of a communication mode and a sensing mode, the second mode is the other one of the communication mode and the sensing mode, and the sensing mode is used to sense a situation change of an environment in which the access network device is located.

When the communication apparatus 800 is configured to implement the functions of the core network device in the foregoing method embodiments, the transceiver unit 820 is configured to send a switching instruction to the access network device, where the switching instruction instructs the access network device to switch from a first operation manner to a second operation manner. The first operation manner is an operation manner in which a communication mode is primary and a sensing mode is secondary, and the second operation manner is an operation manner in which the sensing mode is primary and the communication mode is secondary. Alternatively, the first operation manner is an operation manner in which a sensing mode is primary and a communication mode is secondary, and the second operation manner is an operation manner in which the communication mode is primary and the sensing mode is secondary. The sensing mode is used to sense a situation change of an environment in which the access network device is located.

In a possible implementation method, that the switching instruction instructs the access network device to switch from a first operation manner to a second operation manner includes: The switching instruction instructs the access network device to switch from the first operation manner to the second operation manner at a first moment.

For more detailed descriptions of the processing unit 810 and the transceiver unit 820, directly refer to related descriptions in the foregoing method embodiments. Details are not described herein.

A communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to: store instructions executed by the processor 910, store input data needed by the processor 910 to run instructions, or store data generated after the processor 910 runs instructions.

When the communication apparatus 900 is configured to implement the foregoing method embodiments, the processor 910 is configured to implement functions of the processing unit 810, and the interface circuit 920 is configured to implement functions of the transceiver unit 820.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in a base station or a terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, all or a part of the procedures or functions in embodiments of this application are performed. The computer may be a general-purpose computer, a dedicated computer, a computer network, a base station, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A switching method, comprising:
determining, by an access network device, whether a mode switching condition is met; and
when the mode switching condition is met, switching, by the access network device, an operation mode from a first mode to a second mode, wherein
the first mode is one of a communication mode and a sensing mode, the second mode is the other one of the communication mode and the sensing mode, and the sensing mode is used to sense a situation change of an environment in which the access network device is located.

2. The method according to claim 1, wherein when the operation mode of the access network device is the communication mode, an antenna of the access network device uses a time division duplex mode.

3. The method according to claim 1 or 2, wherein when the operation mode of the access network device is the sensing mode, a first part of antennas of the access network device are configured to send sensing information, a second part of the antennas of the access network device are configured to receive the sensing information, and the access network device receives and sends the sensing information in a full duplex manner.

4. The method according to claim 1 or 2, wherein when the operation mode of the access network device is the sensing mode, a part or all of antennas of the access network device receive and send sensing information in a time division multiplexing manner.

5. The method according to any one of claims 1 to 4, wherein the method further comprises:
receiving, by the access network device, the mode switching condition from a core network device.

6. The method according to any one of claims 1 to 5, wherein the mode switching condition indicates mode switching time at a symbol level, a slot level, or a subframe level.

7. The method according to any one of claims 1 to 5, wherein the method further comprises:
when a quantity of target objects detected by the access network device exceeds a first threshold, updating, by the access network device, the mode switching condition, wherein in time division corresponding to an updated mode switching condition, time used for communication is greater than time used for sensing.

8. The method according to any one of claims 1 to 5, wherein the method further comprises:
when a quantity of target objects detected by the access network device is less than a second threshold, updating, by the access network device, the mode switching condition, wherein in time division corresponding to an updated mode switching condition, time used for communication is less than time used for sensing.

9. The method according to any one of claims 1 to 8, further comprising:
when the operation mode of the access network device is the sensing mode, obtaining, by the access network device, information about the detected target object; and
determining, by the access network device based on the information about the target object, a beam direction and/or a communication shutdown manner that correspond/corresponds to the communication mode.

10. The method according to any one of claims 1 to 9, wherein
one hardware system is configured in the access network device, and the communication mode and the sensing mode share the hardware system; or
a first hardware system and a second hardware system are configured in the access network device, the communication mode corresponds to the first hardware system, and the sensing mode corresponds to the second hardware system.

11. A switching method, comprising:
receiving, by an access network device, a switching instruction from a core network device, wherein the switching instruction instructs the access network device to switch from a first operation manner to a second operation manner; and
switching, by the access network device, from the first operation manner to the second operation manner based on the switching instruction, wherein
the first operation manner is an operation manner in which a communication mode is primary and a sensing mode is secondary, and the second operation manner is an operation manner in which the sensing mode is primary and the communication mode is secondary; or the first operation manner is an operation manner in which a sensing mode is primary and a communication mode is secondary, and the second operation manner is an operation manner in which the communication mode is primary and the sensing mode is secondary, wherein the sensing mode is used to sense a situation change of an environment in which the access network device is located.

12. The method according to claim 11, wherein that the switching instruction instructs the access network device to switch from a first operation manner to a second operation manner comprises:
the switching instruction instructs the access network device to switch from the first operation manner to the second operation manner at a first moment; and
the switching, by the access network device, from the first operation manner to the second operation manner based on the switching instruction comprises:
if determining that a current moment is the first moment, switching, by the access network device, from the first operation manner to the second operation manner.

13. The method according to claim 11 or 12, wherein when an operation mode of the access network device is the communication mode, an antenna of the access network device uses a time division duplex mode.

14. The method according to any one of claims 11 to 13, wherein when the operation mode of the access network device is the sensing mode, a first part of antennas of the access network device are configured to send sensing information, a second part of the antennas of the access network device are configured to receive the sensing information, and the access network device receives and sends the sensing information in a full duplex manner.

15. The method according to any one of claims 11 to 13, wherein when the operation mode of the access network device is the sensing mode, a part or all of antennas of the access network device receive and send the sensing information in a time division multiplexing manner.

16. The method according to any one of claims 11 to 15, further comprising:
when the operation mode of the access network device is the sensing mode, obtaining, by the access network device, information about a detected target object; and
determining, by the access network device based on the information about the target object, a beam direction and/or a communication shutdown manner that correspond/corresponds to the communication mode.

17. The method according to any one of claims 11 to 16, wherein one hardware system is configured in the access network device, and the communication mode and the sensing mode share the hardware system; or
a first hardware system and a second hardware system are configured in the access network device, the communication mode corresponds to the first hardware system, and the sensing mode corresponds to the second hardware system.

18. A communication apparatus, comprising a processor coupled to a memory, wherein the processor is configured to invoke a program stored in the memory, to perform the method according to any one of claims 1 to 10, or perform the method according to any one of claims 11 to 17.

19. A communication apparatus, comprising a processor and a memory, wherein the memory is configured to store computer instructions, and when the communication apparatus runs, the processor executes the computer instructions stored in the memory, to perform the method according to any one of claims 1 to 10, or perform the method according to any one of claims 11 to 17.

20. A communication apparatus, comprising a processor and an interface circuit, wherein the processor is configured to: communicate with another apparatus through the interface circuit, and perform the method according to any one of claims 1 to 10, or perform the method according to any one of claims 11 to 17.

21. A computer program product, wherein the computer program product comprises a computer program or instructions, and when the computer program or the instructions are run on a processor, the processor is enabled to perform the method according to any one of claims 1 to 10, or perform the method according to any one of claims 11 to 17.

22. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 17 is implemented.

23. A communication system, comprising:
a core network device, configured to send a mode switching condition to an access network device; and
the access network device, configured to: determine whether the mode switching condition is met; and when the mode switching condition is met, switch an operation mode from a first mode to a second mode, wherein the first mode is one of a communication mode and a sensing mode, the second mode is the other one of the communication mode and the sensing mode, and the sensing mode is used to sense a situation change of an environment in which the access network device is located.

24. A communication system, comprising an access network device configured to perform the method according to any one of claims 11 to 17, and a core network device configured to send a switching instruction to the access network device.

25. A chip, wherein the chip comprises a processor and an interface circuit, the interface circuit is coupled to the processor, and the processor is configured to run a computer program or instructions, so that the method according to any one of claims 1 to 17 is performed.
